(19) Europäisches Patentamt
European Patent Office
Office européen des brevets

(11) **EP 1 783 544 B1**

(12) **FASCICULE DE BREVET EUROPEEN**

(45) Date de publication et mention
de la délivrance du brevet:
**22.10.2008 Bulletin 2008/43**

(51) Int Cl.:
***G02F 1/11*** *(2006.01)*

(21) Numéro de dépôt: **06291702.6**

(22) Date de dépôt: **30.10.2006**

(54) **Dispositif de dispersion d'impulsions lumineuses programmable en amplitude spectrale**

Spektralamplitude programmierbare Vorrichtung zur Dispersion von Lichtimpulsen

Spectral amplitude programmable light pulse dispersion device

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **03.11.2005 FR 0511185**

(43) Date de publication de la demande:
**09.05.2007 Bulletin 2007/19**

(73) Titulaire: **Fastlite**
**91194 Saint Aubin Cedex (FR)**

(72) Inventeurs:
• **Kaplan, Daniel**
**75006 Paris (FR)**
• **Tournois, Pierre**
**06800 Cagnes sur Mer (FR)**

(74) Mandataire: **de Saint-Palais, Arnaud Marie
Cabinet Moutard,
35, rue de la Paroisse
78000 Versailles (FR)**

(56) Documents cités:
**FR-A- 2 852 155          US-A- 4 685 772**

• **FORK R L ET AL: "NEGATIVE DISPERSION
USING PAIRS PRISMS" OPTICS LETTERS, OSA,
OPTICAL SOCIETY OF AMERICA,
WASHINGTON, DC, US, vol. 9, no. 5, mai 1984
(1984-05), pages 150-152, XP000710428 ISSN:
0146-9592**
• **PARSONS-KARAVASSILIS D ET AL: "Diodepumped all-solid-state ultrafast Cr:LiSGAF laser
oscillator-amplifier system applied to laser
ablation" OPTICS COMMUNICATIONS, NORTH-
HOLLAND PUBLISHING CO. AMSTERDAM, NL,
vol. 175, no. 4-6, mars 2000 (2000-03), pages
389-396, XP004202919 ISSN: 0030-4018**

**EP 1 783 544 B1**

**Description**

La présente invention concerne un dispositif de dispersion d'impulsions lumineuses programmable en amplitude spectrale.

D'une manière générale, on sait que la Demanderesse a déjà proposé dans la demande FR2 852 155 un dispositif de contrôle de l'amplitude du spectre ou longueurs d'ondes des impulsions lumineuses ultra-brèves émises par un amplificateur laser à passages multiples comportant un dispositif acousto-optique associé à un train de deux prismes de correction.

Par ailleurs, on sait que de nombreux dispositifs de dispersion d'impulsions lumineuses brèves existent. L'un d'entre eux, proposé pour la première fois par R.L. Fork et al "Negative dispersion using pairs of prisms" publié dans Optics Letters, mai 1984, consiste à utiliser un train de deux prismes identiques inversés (la face d'entrée du premier prisme est parallèle à la face de sortie du second prisme).

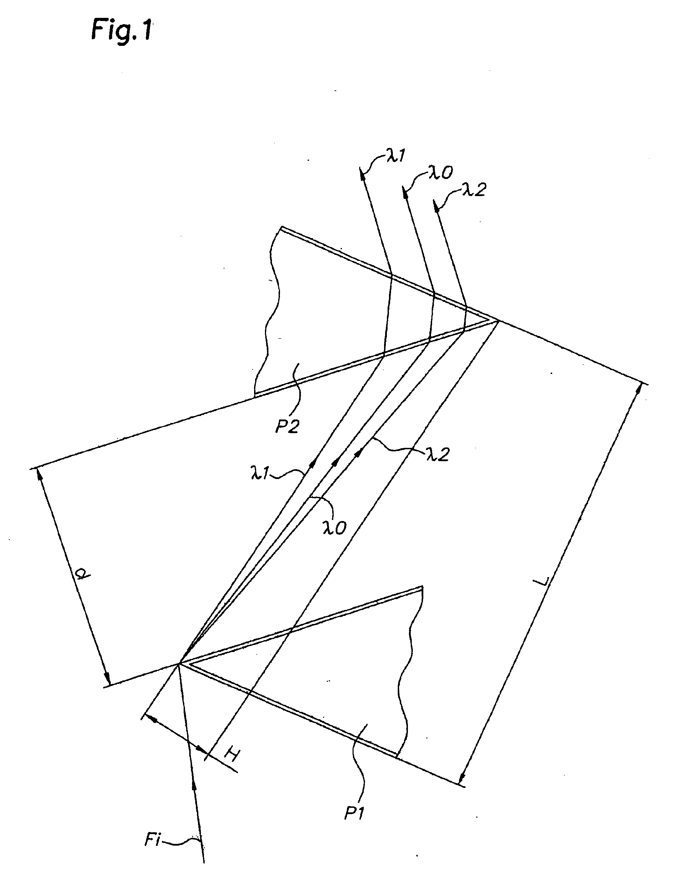

Dans l'exemple représenté sur la figure 1, décrivant l'état de l'art concernant notamment le dispositif cité précédemment, deux prismes $P_1$, $P_2$, de même angle au sommet $\alpha$, sont disposés tête-bêche, la face d'entrée dudit prisme $P_1$ est parallèle à la face de sortie dudit prisme $P_2$, la distance les séparant étant L ; la face de sortie dudit premier prisme $P_1$ est par conséquent parallèle à la face d'entrée dudit prisme $P_2$, la distance les séparant étant d ; la projection du sommet dudit prisme $P_2$ sur la face d'entrée dudit prisme $P_1$ est distante de H du sommet dudit prisme $P_1$.

La modification de la caractéristique de dispersion reliant le temps de retard à la longueur d'onde optique, est effectuée en modifiant la distance L qui sépare les faces d'entrée et de sortie des prismes $P_1$, $P_2$; la modification de la caractéristique de dispersion peut également être effectuée en modifiant la distance H qui sépare les sommets des deux prismes $P_1$, $P_2$.

Il s'avère que tous ces dispositifs de dispersion d'impulsions lumineuses brèves ne permettent pas de modifier au cours du temps l'amplitude relative des diverses longueurs d'onde desdites impulsions lumineuses.

L'invention a donc plus particulièrement pour but de supprimer cet inconvénient. Elle propose un dispositif de dispersion d'impulsions lumineuses d'un faisceau optique constitué de deux prismes dispersifs, de même angle au sommet, montés tête-bêche, la face d'entrée optique du premier prisme étant parallèle à la face de sortie optique du second prisme, la distance séparant la susdite face d'entrée optique du premier prisme et la susdite face de sortie optique du second prisme étant réglable, sachant que le matériau constituant au moins l'un desdits premier et second prismes est un matériau acousto-optique permettant une interaction acousto-optique entre le susdit faisceau optique et un faisceau acoustique engendré par un transducteur piézoélectrique, l'onde acoustique dudit faisceau acoustique générant dans au moins l'un desdits premier et second prismes, une cellule de Bragg déflectrice intégrée.

Dans un tel dispositif, les diverses longueurs d'onde optique ont été séparées spatialement les unes des autres, d'une manière transversale, par la dispersion des prismes.

La cellule acousto-optique de Bragg, dont l'axe est quasi-perpendiculaire aux rayons lumineux, diffracte, sélectivement en amplitude, les diverses longueurs d'onde optique en fonction des signaux appliqués au transducteur de ladite cellule de Bragg.

Les ondes diffractées sont éliminées du dispositif selon l'invention ; seules les ondes non diffractées, dont l'amplitude en fonction de la longueur d'onde optique a été rendue programmable par l'interaction acousto-optique, participent au dispositif de dispersion.

Avantageusement, les premier et second prismes sont disposés de manière à ce que le faisceau optique incident soit perpendiculaire ou quasi-perpendiculaire aux faces respectivement d'entrée et de sortie desdits premier et second prismes, et soit polarisé perpendiculairement aux arêtes des prismes.

Par ailleurs, les premier et second prismes comprennent un angle au sommet tel que le rayon lumineux dudit faisceau optique correspondant à une longueur d'onde au centre du spectre soit sous l'incidence de Brewster relativement aux faces respectivement de sortie et d'entrée desdits premier et second prismes.

Avantageusement, le matériau constituant au moins l'un desdits premier et second prismes est un matériau acousto-optique de type cristal de dioxyde de tellure ($TeO_2$) dont une face associée au transducteur piézoélectrique Ta fait un angle inférieur à 15 degrés avec l'axe optique [001] dudit cristal de dioxyde de tellure ($TeO_2$).

Par ailleurs, ledit transducteur piézoélectrique Ta génère une onde acoustique dont l'amplitude et/ou la fréquence sont programmées en fonction du temps ; les signaux appliqués audit transducteur piézoélectrique Ta sont fournis par un générateur, associé à un calculateur qui affiche les paramètres d'amplitude et de fréquence souhaités en fonction du temps.

Un mode de mise en oeuvre du dispositif selon l'invention est décrit ci-après, à titre d'exemple non limitatif, avec référence aux dessins annexés dans lesquels :

- La figure 1 est une représentation schématique d'un dispositif selon l'art antérieur,
- La figure 2 est une représentation schématique du dispositif selon l'invention,
- La figure 3 est une représentation des courbes d'indice ordinaire et extraordinaire du cristal de dioxyde de tellure

(TeO$_2$) dans le plan contenant les axes optiques [110] et [001],

- La figure 4 est une représentation des caractéristiques de variation relative du temps de retard de groupe en fonction de la longueur d'onde optique,
- La figure 5 est une représentation des caractéristiques de variation relative de la hauteur de la colonne acoustique en fonction de la longueur d'onde optique, et
- La figure 6 est une représentation de la caractéristique de la fréquence acoustique à appliquer en fonction de la longueur d'onde optique.

Dans l'exemple représenté sur la figure 1 (art antérieur), deux prismes P$_1$, P$_2$, de même angle au sommet $\alpha$, sont disposés tête-bêche, la face d'entrée dudit prisme P$_1$ est parallèle à la face de sortie dudit prisme P$_2$, la distance les séparant étant L ; la face de sortie dudit premier prisme P$_1$ est par conséquent parallèle à la face d'entrée dudit prisme P$_2$, la distance les séparant étant d ; la projection du sommet dudit prisme P$_2$ sur la face d'entrée dudit prisme P$_1$ est distante de H du sommet dudit prisme P$_1$.

Un faisceau optique Fi incident est diffracté par le prisme P$_1$, laquelle diffraction résultante est représentée par trois trajets optiques de longueur d'onde $\lambda_1$, $\lambda_2$, de part et d'autre d'une longueur d'onde centrale $\lambda_0$, lesquels trajets sont diffractés à nouveau dans le second prisme P$_2$; en sortie du second prisme P2 les trois trajets optiques de longueur d'onde $\lambda_0$, $\lambda_1$, $\lambda_2$, sont spatialement séparés les uns des autres et parallèles au faisceau incident Fi, la dispersion reliant le temps de retard à la longueur d'onde optique étant fonction de la distance L et/ou de la distance H.

A noter que la variation du temps de retard peut être positive ou négative selon les caractéristiques géométriques du dispositif.

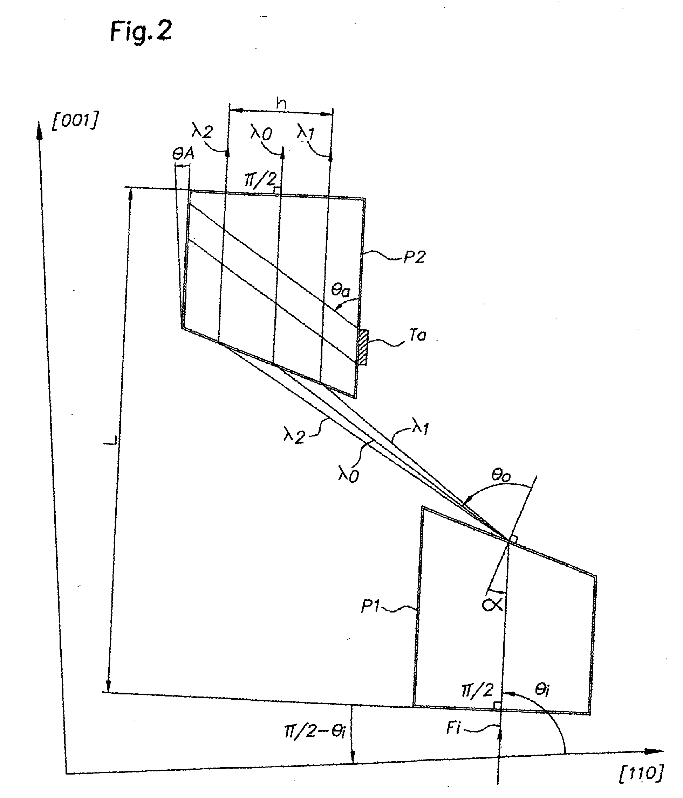

Dans l'exemple représenté sur la figure 2, deux prismes tronqués P$_1$, P$_2$, de même angle au sommet $\alpha$, sont disposés tête-bêche, la face d'entrée dudit prisme P$_1$ est parallèle à la face de sortie dudit prisme P$_2$, la distance les séparant étant L ; la face de sortie dudit premier prisme P$_1$ est par conséquent parallèle à la face d'entrée dudit prisme P$_2$, la distance les séparant étant d ; la distance entre les sommets des prismes P$_1$, P$_2$, définie perpendiculairement à la distance L est égale à H.

Un faisceau optique incident Fi est perpendiculaire aux faces d'entrée et de sortie respectivement desdits prismes P$_1$, P$_2$; la polarisation de la lumière est perpendiculaire aux arêtes des prismes ; le matériau constituant lesdits prismes P$_1$, P$_2$, est un cristal acousto-optique biréfringent de dioxyde de tellure TeO$_2$; l'angle au sommet desdits prismes P$_1$, P$_2$, est tel que la longueur d'onde centrale de la bande passante des impulsions lumineuses, ressorte de la face de sortie du prisme P$_1$ et entre dans la face d'entrée du prisme P$_2$, sous l'angle de Brewster.

Ainsi, au voisinage de la face de sortie du premier prisme P$_1$, les longueurs d'onde, représentées par les trajets optiques $\lambda_0$, $\lambda_1$, $\lambda_2$, sont spatialement séparés les uns des autres, pour aboutir sur la face d'entrée du second prisme P$_2$, lesquels, après réfraction dans le second prisme P$_2$, sont parallèles entre eux et normaux à la face de sortie du second prisme P$_2$.

Si :

- L est la distance séparant les faces d'entrée et de sortie respectivement des prismes P$_1$, P$_2$,
- H est la distance entre les sommets desdits prismes P$_1$, P$_2$, définie perpendiculairement à la distance L,
- $\alpha$ est l'angle au sommet des prismes P$_1$, P$_2$,
- $\theta$ est l'angle de diffraction entre les prismes P$_1$, P$_2$, fonction de la longueur d'onde, défmi par rapport à la normale aux faces de sortie et d'entrée respectivement des prismes P$_1$, P$_2$,
- c est la vitesse de la lumière,
- n est l'indice extraordinaire du cristal de dioxyde de tellure, et N (N = n
- $\lambda.dn/d\lambda$), est l'indice de groupe extraordinaire du cristal de dioxyde de tellure, dans la direction des rayons lumineux incidents,

le temps de retard de groupe t$_R$ de la lumière entre les faces d'entrée et de sortie respectivement des prismes P$_1$, P$_2$, est défini par la relation suivante :

$$\frac{ct_R}{L} = \frac{1}{G}.\left[\frac{1}{\cos\theta} + N.\left(G - \cos\alpha - \sin\alpha.\tan\theta\right)\right]$$

avec :

$$\sin \theta = n.\sin \alpha$$

$$\alpha + \theta_0 = \pi / 2$$

- $\theta_0$ étant l'angle de diffraction, pour la longueur d'onde centrale $\lambda_0$, qui obéit à la condition de Brewster, soit :

$$\tan \theta_0 = n \, (\lambda_0),$$

et
- G étant un paramètre géométrique égal au rapport de la susdite distance L à la susdite distance d, défini par la relation suivante :

$$G = \frac{L}{d} = \left( \cos \alpha - \frac{H}{L}.\sin \alpha \right)^{-1}$$

Dans l'exemple représenté sur la figure 2, un transducteur piézoélectrique Ta, constituant la cellule de Bragg, est solidaire de la surface de base du prisme $P_2$, laquelle surface de base fait un angle $\theta_A$ de quelques degrés avec l'axe optique [001] du cristal de dioxyde de tellure, soit 5 degrés à titre d'exemple.

La hauteur acoustique $\Delta h$ est définie comme étant la distance qui séparent les trajets optiques de longueur d'onde $\lambda_1$, $\lambda_2$, de part et d'autre de la longueur d'onde centrale $\lambda_0$, dans le second prisme $P_2$,

Ainsi :

- $\theta_A$ est l'angle de la base du prisme $P_2$ par rapport à l'axe optique [001] du cristal ; $\theta_A$ est également l'angle du vecteur d'onde acoustique avec l'axe optique [110] du cristal,
- $\theta_i$ est l'angle du faisceau incident Fi par rapport à l'axe optique [110] du cristal,
- $\theta_0$ est l'angle du trajet optique de longueur d'onde $\lambda_0$ par rapport à la normale à la face de sortie du premier prisme $P_1$, et
- $\theta_a$ est l'angle d'inclinaison du faisceau d'énergie acoustique par rapport à la base du second prisme $P_2$.

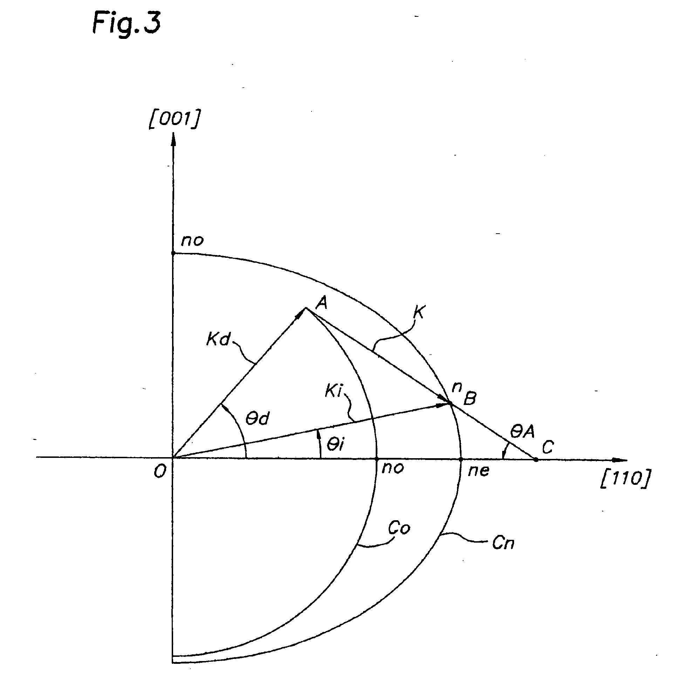

Dans l'exemple représenté sur la figure 3 :

- l'axe des abscisses est représenté par l'axe optique [110] du cristal de dioxyde de tellure,
- l'axe des ordonnées est représenté par l'axe optique [001] du cristal de dioxyde de tellure,
- la courbe d'indice ordinaire $n_0$ est représentée par le cercle $C_o$ de centre O,
- la courbe d'indice extraordinaire n est représentée par l'ellipse $C_1$ dont le petit axe, selon [001], correspond au rayon $n_0$ dudit cercle $C_o$, et le grand axe, selon [110] a la valeur $n_e$.

La déflexion se fait des rayons incidents extraordinaires vers des rayons diffractés ordinaires dans le plan contenant les axes optiques [001] et [110] du cristal de dioxyde de tellure ; pour la longueur d'onde centrale, le vecteur d'onde acoustique est approximativement tangent à la courbe d'indice ordinaire de manière à assurer la plus grande bande spectrale possible à la diffraction des rayons extraordinaires incidents vers les rayons ordinaires, ainsi :

- le vecteur d'onde optique incident $k_i$ est représenté par le vecteur OB,
- le vecteur d'onde optique diffracté $k_d$ est représenté par le vecteur OA,
- le vecteur d'onde acoustique K est représenté par le vecteur AB,
- $\theta_i$ est l'angle du vecteur d'onde optique incident $k_i$ par rapport à l'axe optique [110],
- $\theta_d$ est l'angle du vecteur d'onde optique diffracté $k_d$ par rapport à l'axe optique [110],
- $\theta_A$ est l'angle du vecteur d'onde acoustique K par rapport à l'axe optique [110].
- Dans ces conditions, l'angle $\theta_i$ du vecteur d'onde optique incident $k_i$ par rapport à l'axe optique [110], est relié à l'angle $\theta_A$ de la base du prisme $P_2$ par rapport à l'axe optique [001], par la relation suivante :

$$\sin\left(\theta_i + \theta_A\right) = n_0(\lambda_0) / n(\lambda_0)$$

n est relié aux indices ordinaire $n_0$ et extraordinaire $n_e$ sur l'axe optique [110], par la relation suivante :

$$n = \frac{n_0 n_e}{\sqrt{n_0^2 \cos^2 \theta_i + n_e^2 \sin^2 \theta_i}}$$

et $n_0$ et $n_e$ sont donnés en fonction de la longueur d'onde par les relations de Sellmeier, à savoir :

$$n_0 = \sqrt{1 + \frac{2.5838\lambda^2}{\lambda^2 - 0.01801} + \frac{1.1566\lambda^2}{\lambda^2 - 0.06959}} \quad \text{et} \quad n_e = \sqrt{1 + \frac{2.8228\lambda^2}{\lambda^2 - 0.01801} + \frac{1.5416\lambda^2}{\lambda^2 - 0.06922}}$$

A titre d'exemple, si $\lambda_0$ est égal à 0,8 $\mu$m :

- $n_0$ = 2,226,
- $n_e$ = 2,373, et
  si $\theta_A$ est égal à 5 ° :

- $\theta_i$ = 82,36 °,
- n = 2,229,
- $\theta_0$ = 65,83°,
- $\alpha$ = 24,16 °,
- $\theta_a$ = 49,43 °.

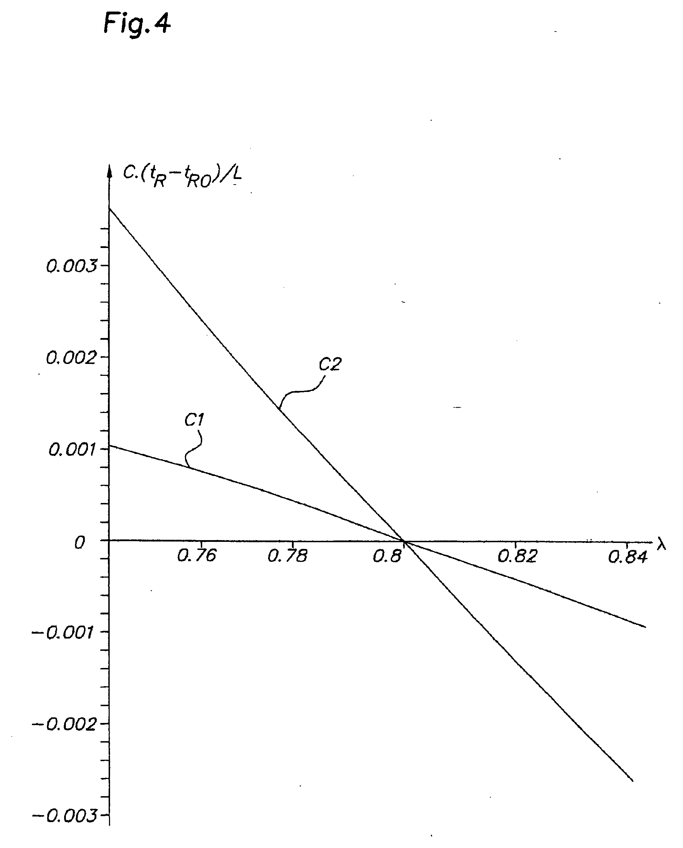

Dans l'exemple représenté sur la figure 4, les caractéristiques de variation relative du temps de retard de groupe en fonction de la longueur d'onde optique sont représentées.

Si $t_{R0}$ est le temps de retard de groupe pour la longueur d'onde centrale $\lambda_0$ égale à 0,8 $\mu$m, la variation :

$$c.(t_R - t_{R0}) / L$$

est représentée en fonction de la longueur optique $\lambda$ pour deux valeurs de H/L, L étant la distance séparant les faces d'entrée et de sortie respectivement des prismes $P_1$, $P_2$, H étant la distance entre les sommets desdits prismes $P_1$, $P_2$, définie perpendiculairement à la distance L,
à savoir :
les courbes $C_1$, $C_2$, respectivement pour H/L = 1,01 et pour H/L = 1,13.

La hauteur $\Delta h$ de la colonne acoustique dans le second prisme $P_2$, comme indiqué précédemment, est donnée autour de la longueur d'onde centrale $\lambda_0$. L'écart h - $h_0$ est défini par la relation suivante :

$$\frac{h - h_0}{L} = (\cos\alpha - \frac{H}{L}\sin\alpha)\left[\frac{\sin(\theta - \alpha)}{\cos\theta} - \frac{\sin(\theta_0 - \alpha)}{\cos\theta_0}\right]$$

sachant que :

- $\alpha$ est l'angle au sommet des prismes $P_1$, $P_2$,
- $\theta_0$ est l'angle du trajet optique de longueur d'onde $\lambda_0$ par rapport à la normale à la face de sortie du premier prisme $P_1$, et
- 0 est l'angle du trajet optique de longueur d'onde $\lambda$ par rapport à la normale à la face de sortie du premier prisme $P_1$.

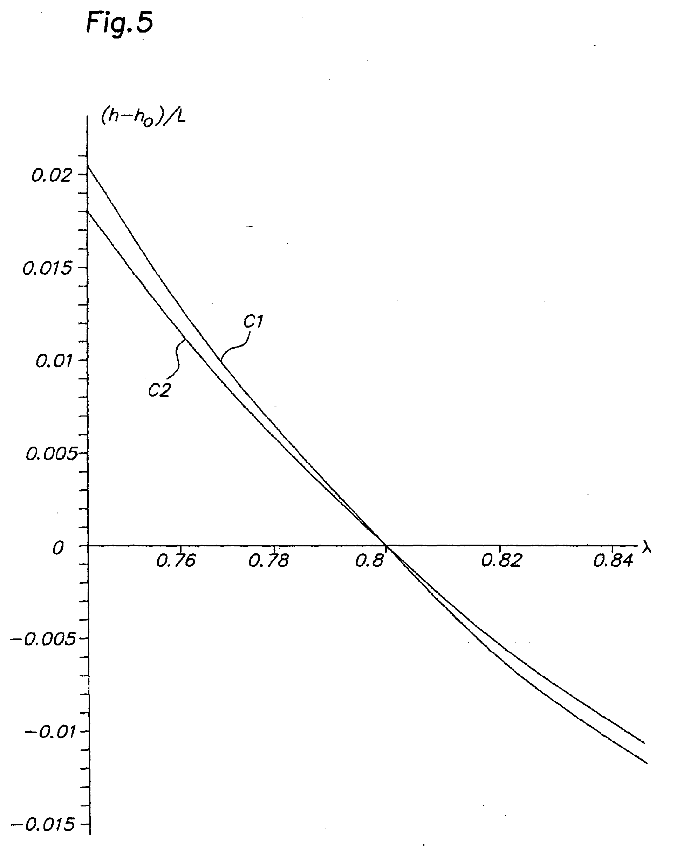

Dans l'exemple représenté sur la figure 5, les caractéristiques de variation relative de la hauteur de la colonne acoustique en fonction de la longueur d'onde optique sont représentées.

La variation :

$$(h - h_0) / L$$

est représentée en fonction de la longueur d'onde optique $\lambda$ pour deux valeurs de H/L, L étant la distance séparant les faces d'entrée et de sortie respectivement des prismes $P_1$, $P_2$, H étant la distance entre les sommets desdits prismes $P_1$, $P_2$, définie perpendiculairement à la distance L,

à savoir :

les courbes $C_1$, $C_2$, respectivement pour H/L = 1,01 et pour H/L = 1,13.

La longueur totale 1 du cristal de dioxyde de tellure traversée par la lumière à la longueur d'onde centrale $\lambda_0$ est donnée par la relation suivante :

$$\frac{l}{L} = (\frac{H}{L} \sin 2\alpha - \cos 2\alpha)$$

Les fréquences à appliquer au transducteur piézoélectrique Ta sont données par la relation suivante :

$$f = \sqrt{(615^2 \cos^2 \theta_A + 2100^2 \sin^2 \theta_A)} . \sqrt{(n^2 - n_0^2)} / \lambda$$

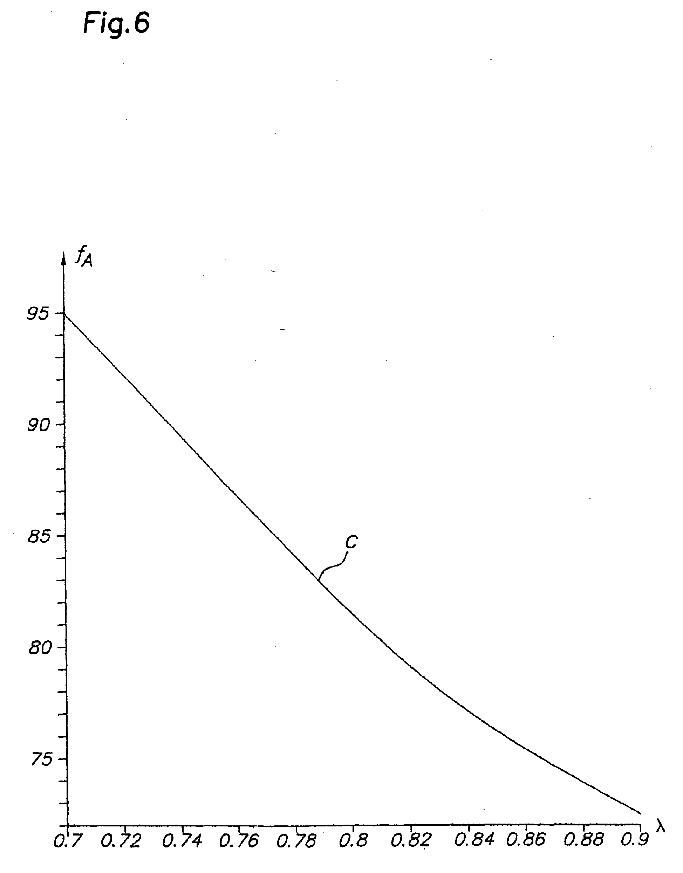

Dans l'exemple représenté sur la figure 6, la caractéristique de la fréquence acoustique $f_A$ à appliquer en fonction de la longueur d'onde optique $\lambda$ est définie pour $\theta_A$ est égal à 5 degrés (courbe C).

A titre d'exemple, pour une bande passante optique de 100 nm, une longueur L de 56 cm, une hauteur H de 56 cm,

- la variation du temps de retard de groupe est de 4,5 picosecondes,
- la longueur totale 1 de cristal traversé par la lumière est de 50 mm,
- la zone de la hauteur $\Delta$h de la colonne acoustique sur laquelle sont réparties les longueurs d'onde du faisceau incident Fi est de 20 mm, et
- le domaine des fréquences à appliquer sur le transducteur acoustique se situe entre 75 et 90 MHz.

Ainsi, le nombre de points de programmation de l'amplitude spectrale du dispositif selon l'invention, défini comme étant le rapport de la zone de la hauteur $\Delta$h de la colonne acoustique sur laquelle sont réparties les longueurs d'onde, au diamètre du faisceau incident Fi est, dans le cas présent, de 20 points pour un diamètre de faisceau incident Fi de 1 mm.

Avantageusement, l'amplitude et/ou la fréquence de l'onde acoustique générée par ledit transducteur piézoélectrique Ta sont programmées en fonction du temps ; les signaux appliqués audit transducteur piézoélectrique Ta sont fournis par un générateur, associé à un calculateur qui affiche les paramètres d'amplitude et de fréquence souhaités en fonction du temps.

**Revendications**

1.  Dispositif de dispersion d'impulsions lumineuses d'un faisceau optique (Fi) constitué de deux prismes dispersifs (P1, P2), de même angle au sommet ($\alpha$), montés tête-bêche, la face d'entrée optique du premier prisme (P1) étant parallèle à la face de sortie optique du second prisme (P2), la distance (L) séparant la susdite face d'entrée optique du premier prisme (P1) et la susdite face de sortie optique du second prisme (P2) étant réglable, le matériau constituant au moins l'un desdits premier et second prismes (P1, P2) étant un matériau acousto-optique, le dispositif comprenant en outre un transducteur piézoélectrique (Ta),

    **caractérisé en ce que**

    le dispositif permette une interaction acousto-optique entre le susdit faisceau optique et un faisceau acoustique engendré par le transducteur piézoélectrique (Ta), l'onde acoustique dudit faisceau acoustique générant, dans le susdit au moins un desdits premier et second prismes (P1, P2), une cellule de Bragg déflectrice intégrée, la susdite cellule de Bragg, dont l'axe, défini par la direction du vecteur d'onde acoustique, étant quasi-perpendiculaire au susdit faisceau optique, diffracte, sélectivement en amplitude, les diverses longueurs d'onde du susdit faisceau optique en fonction des caractéristiques du susdit faisceau acoustique, générant ainsi des ondes optiques non diffractées et des ondes optiques diffractées, les susdites ondes diffractées étant éliminées, l'amplitude des susdites ondes non diffractées est programmable en fonction de la longueur d'onde optique par la susdite interaction acousto-optique.

**2.** Dispositif selon la revendication 1,
**caractérisé en ce que** les premier et second prismes ($P_1$, $P_2$) sont aptes à être disposés de manière à ce que le faisceau optique incident (Fi) soit perpendiculaire ou quasi-perpendiculaire aux faces respectivement d'entrée et de sortie desdits premier et second prismes ($P_1$, $P_2$), et soit polarisé perpendiculairement aux arêtes desdits prismes ($P_1$, $P_2$).

**3.** Dispositif selon la revendication 1,
**caractérisé en ce que,** les premier et second prismes ($P_1$, $P_2$) comprennent un angle au sommet ($\alpha$), tel que le rayon lumineux ($\lambda_0$) dudit faisceau optique (Fi) correspondant à une longueur d'onde au centre du spectre puisse être sous l'incidence de Brewster relativement aux faces respectivement de sortie et d'entrée desdits premier et second prismes ($P_1$, $P_2$).

**4.** Dispositif selon la revendication 1,
**caractérisé en ce que** le matériau constituant au moins l'un desdits premier et second prismes ($P_1$, $P_2$), est un matériau acousto-optique de type cristal de dioxyde de tellure ($TeO_2$) dont une face associée au transducteur piézoélectrique (Ta) fait un angle inférieur à 15 degrés avec l'axe optique [001] dudit cristal de dioxyde de tellure ($TeO_2$).

**5.** Dispositif selon la revendication 1,
**caractérisé en ce que** ledit transducteur piézoélectrique (Ta) génère une onde acoustique; les signaux appliqués audit transducteur piézoélectrique (Ta) sont fournis par un générateur, associé à un calculateur qui affiche les paramètres d'amplitude et de fréquence souhaités en fonction du temps.

**Claims**

**1.** A device for dispersing light pulses from an optical beam (Fi) made of two dispersive prisms ($P_1$, $P_2$), with the same apical angle ($\alpha$), mounted head-to-foot, the optical input face of the first prism ($P_1$) being parallel to the optical output face of the second prism ($P_2$), the distance (L) between said optical input face of the first prism ($P_1$) and said optical output face ($P_2$) being adjustable, the material making at least one of said first and second prisms ($P_1$, $P_2$) being an acousto-optical material, the device further comprising a piezoelectric transducer (Ta),
**characterised in that**
the device allows an acousto-optical interaction to happen between said optical beam and an acoustic beam generated by the piezoelectric transducer (Ta), the acoustic wave of said acoustic beam generating, in said at least one of said first and second prisms ($P_1$, $P_2$), an integral deflecting Bragg cell, said Bragg cell, the axis thereof, defined by the acoustic wave vector direction, being almost orthogonal to said optical beam, diffracts magnitude-selectively, the various wavelengths of said optical beam according to the characteristics of said acoustic beam, thus generating non-diffracted optical waves and diffracted optical waves, said diffracted waves being removed, the magnitude of said non-diffracted waves being programmable according to the optical wavelength by said acousto-optical interaction.

**2.** Device according to claim 1,
**characterised in that** the first and second prisms ($P_1$, $P_2$) are suitable to be provided so that the incident optical beam (Fi) is orthogonal or almost orthogonal to the input and output faces, respectively, of said first and second prisms ($P_1$, $P_2$) and is biased orthogonally to the edges of said prisms ($P_1$, $P_2$).

**3.** Device according to claim 1,
**characterised in that** the first and second prisms ($P_1$, $P_2$) include an apical angle ($\alpha$), such that the light ray ($\lambda_0$) of said optical beam (Fi) corresponding to the wavelength at the spectrum centre may be at the Brewster angle in relation to input and the output faces, respectively, of said first and second prisms ($P_1$, $P_2$).

4. Device according to claim 1,
**characterised in that** the material making at least one of said first and second prisms ($P_1$, $P_2$) is an acousto-optical material of tellurium dioxide ($TeO_2$) crystal type, one face thereof associated to the piezoelectric transducer (Ta) forms an angle lower than 15 degrees with the optical axis [001] of said tellurium dioxide ($TeO_2$) crystal.

5. Device according to claim 1,
**characterised in that** said piezoelectric transducer (Ta) generates an acoustic wave; the signals applied to said piezoelectric transducer (Ta) are provided by a generator, associated to a calculator which displays the desired magnitude and frequency parameters according to the time.

**Patentansprüche**

1. Vorrichtung zur Dispersion von Lichtimpulsen eines optischen Bündels (Fi), welche aus zwei Dispersionsprismen (P1, P2) mit gleichem Spitzenwinkel ($\alpha$) besteht, die derart umgekehrt zueinander angeordnet sind, dass die optische Eintrittsfläche des ersten Prismas (P1) parallel zur optischen Austrittsfläche des zweiten Prismas (P2) verläuft, wobei die Entfernung (L), welche die oben genannte optische Eintrittsfläche des ersten Prismas (P1) von der oben genannten optischen Austrittsfläche des zweiten Prismas (P2) trennt, einstellbar ist und wobei das Material, aus dem mindestens eines der besagten ersten und zweiten Prismen (P1, P2) besteht, ein akusto-optisches Material ist und die Vorrichtung weiterhin einen piezo-elektrischen Wandler (Ta) umfasst, **dadurch gekennzeichnet, dass** die Vorrichtung eine akusto-optische Wechselwirkung zwischen dem oben genannten optischen Bündel und einem akustischen Bündel zulässt, das durch den piezo-elektrischen Wandler (Ta) erzeugt ist, wobei die akustische Welle des besagten akustischen Bündels in dem oben genannten mindestens einen der besagten ersten und zweiten Prismen (P1, P2) eine integrierte ablenkende Bragg-Zelle erzeugt und die oben genannte Bragg-Zelle, deren durch die Richtung des Vektors der akustischen Welle definierte Achse quasi-senkrecht zum oben genannten optischen Bündel verläuft, mit selektiver Amplitude die unterschiedlichen Wellenlängen des oben genannten optischen Bündels in Abhängigkeit von den charakteristischen Eigenschaften des oben genannten akustischen Bündels beugt und so nicht gebeugte optische Wellen und gebeugte optische Wellen erzeugt, wobei die oben genannten gebeugten Wellen eliminiert werden und die Amplitude der oben genannten nicht gebeugten Wellen in Abhängigkeit von der Wellenlänge der optischen Welle durch die oben genannte akusto-optische Wechselwirkung programmierbar ist.

2. Vorrichtung nach Anspruch 1, **dadurch gekennzeichnet, dass** die ersten und zweiten Prismen (P1, P2) dazu geeignet sind, derart angeordnet zu werden, dass das einfallende optische Bündel (Fi) senkrecht oder quasi-senkrecht zur jeweiligen Eintritts- und Austrittsfläche der besagten ersten und zweiten Prismen (P1, P2) verläuft und senkrecht zu den Kanten der besagten Prismen (P1, P2) polarisiert ist.

3. Vorrichtung nach Anspruch 1, **dadurch gekennzeichnet, dass** die ersten und zweiten Prismen (P1, P2) einen solchen Spitzenwinkel ($\alpha$) besitzen, dass der einer Wellenlänge im Zentrum des Spektrums entsprechende Lichtstrahl ($\lambda_0$) des besagten optischen Bündels (Fi) unter einem Brewster-Einfallswinkel relativ zu den jeweiligen Austritts- und Eintrittsflächen der besagten ersten und zweiten Prismen (P1, P2) verlaufen kann.

4. Vorrichtung nach Anspruch 1, **dadurch gekennzeichnet, dass** das Material, aus dem mindestens eines der besagten ersten und zweiten Prismen (P1, P2) besteht, ein akusto-optisches Material vom Kristalltyp des Tellurdioxids ($TeO_2$) ist, dessen eine dem piezo-elektrischen Wandler (Ta) zugeordnete Fläche mit der optischen Achse [001] des besagten Kristalls aus Tellurdioxid ($TeO_2$) einen Winkel unterhalb von 15° bildet.

5. Vorrichtung nach Anspruch 1, **dadurch gekennzeichnet, dass** der besagte piezoelektrische Wandler (Ta) eine akustische Welle erzeugt, wobei die dem piezo-elektrischen Wandler (Ta) zugeführten Signale durch einen Generator geliefert werden, der mit einem Rechner verknüpft ist, welcher die gewünschten Parameter der Amplitude und der Frequenz als Funktion der Zeit anzeigt.

## Fig.1

# Fig.2

## Fig.3

# Fig.4

## Fig.5

## Fig.6

**EP 1 783 544 B1**

## RÉFÉRENCES CITÉES DANS LA DESCRIPTION

**Documents brevets cités dans la description**

- FR 2852155